# EUROPEAN PATENT APPLICATION

(11) **EP 4 140 688 A1**
(43) Date of publication of application: **01.03.2023**
(21) Application number: 22191550.7
(22) Date of filing: 22.08.2022
(51) Int. Cl.: B29C 44/14

(54) **COMPOSITE AND METHOD OF MANUFACTURING THE SAME**

(30) Priority: 23.08.2021 US 202163236051 P; 23.08.2021 US 202163236044 P; 24.01.2022 US 202217582798; 18.08.2022 TW 111131135
(71) Applicant: Otrajet Inc., Taichung City 40768 (TW)
(72) Inventor: CHEN, Ching-Hao, 407 TAICHUNG CITY (TW); YEH, Liang-Hui, 402 TAICHUNG CITY (TW); CHEN, Ting-Wei, 407 TAICHUNG CITY (TW)
(74) Representative: Michalski Hüttermann & Partner Patentanwälte mbB

(57) **Abstract**

A method of manufacturing a composite includes disposing a flexible layer between a first mold and a second mold, wherein at least a portion of the flexible layer is located in a mold cavity defined by the first mold and the second mold, and the mold cavity includes a first mold cavity of the first mold and a second mold cavity of the second mold; pushing or pulling the at least a portion of the flexible layer toward the first mold such that the at least a portion of the flexible layer is placed in the first cavity; and injecting a molding material into the mold cavity such that the molding material and the at least a portion of the flexible layer in the first mold cavity come into contact and form the composite.

## Description

### FIELD

The present disclosure relates to a composite and a method of manufacturing the same, and more particularly to a composite including a molding material and manufactured in a molding device and a method of manufacturing the same.

### BACKGROUND

A molding material including a polymer features various advantages such as high strength, low weight, impact resistance and thermal insulation. Products of such molding material may be manufactured by means of injection or molding. For example, a polymer is melted and mixed with a foaming agent to form a molding material, a force or pressure is applied to the molding material, the mixture is injected or extruded into a cavity of a mold, and the mixture is allowed to foam and cool in the cavity, so as to form a foam structure. To be able to apply the foam structure in more uses, the foam structure may be combined with other components to form a composite that is then applied in various fields.

### SUMMARY OF THE PRESENT DISCLOSURE

It is an object of the present disclosure to provide a method of manufacturing a composite.

A method of manufacturing a composite is disclosed according to a specific embodiment of the present disclosure. The method includes disposing a flexible layer between a first mold and a second mold, wherein at least a portion of the flexible layer is located in a mold cavity defined by the first mold and the second mold, and the mold cavity includes a first mold cavity of the first mold and a second mold cavity of the second mold; pushing or pulling the at least a portion of the flexible layer toward the first mold such that the at least a portion of the flexible layer is placed in the first cavity; and injecting a molding material into the mold cavity such that the molding material and the at least a portion of the flexible layer in the first mold cavity come into contact and form the composite.

A method of manufacturing a composite including a molding material and a flexible layer is disclosed according to a specific embodiment of the present disclosure. The method includes: providing a molding device, the molding device including a first mold, a second mold capable of being positioned in alignment with the first mold, and a mold cavity defined by the first mold and the second mold, the mold cavity including a first mold cavity of the first mold and a second mold cavity of the second mold; disposing a flexible layer between the first mold and the second mold; positioning the first mold in alignment with the second mold such that at least a portion of the flexible layer is located in the mold cavity; injecting or discharging a gas into or out of the mold cavity such that the at least a portion of the flexible layer is pushed or pulled toward an inner wall of the first mold; and injecting a molding material into the mold cavity such that the molding material and the flexible layer come into contact and form the composite, wherein the least a portion of the flexible layer is located between the molding material and the first mold, and the molding material includes a foam material.

### BRIEF DESCRIPTION OF THE DRAWINGS

Embodiments of the present disclosure are described in detail with the accompanying drawings below for better understanding. It should be noted that, the components are not drawn to actual scales according to a standard practice of industry. In fact, for better clarity, the sizes of numerous components may be upscaled or downscaled as appropriate.
FIG. 1 is a schematic diagram of a composite according to a specific embodiment of the present disclosure;
FIG. 2 is a schematic diagram of a composite according to a specific embodiment of the present disclosure;
FIG. 3 is a flowchart of a method of manufacturing a composite according to a specific embodiment of the present disclosure;
FIG. 4 is a flowchart of a method of manufacturing a composite including a molding material and a flexible layer according to a specific embodiment of the present disclosure;
FIG. 5 to FIG. 11 are schematic diagrams of demonstration operations of a method of manufacturing a composite according to a specific embodiment of the present disclosure;
FIG. 12 and FIG. 13 are schematic diagrams of an injection molding system according to a specific embodiment of the present disclosure;
FIG. 14 is a schematic diagram of a portion of the injection molding system in FIG. 12 and FIG. 13 according to a specific embodiment of the present disclosure;
FIG. 15 is an enlarged diagram of a circled portion of the injection molding system in FIG. 12 and FIG. 13 according to a specific embodiment of the present disclosure;
FIG. 16 is a graph illustrating a relation between the amount of a foaming agent in a mixture and a shortest distance according to an embodiment of the present disclosure;
FIG. 17 is a graph illustrating behaviors of the proportion between a foaming agent and a polymeric material versus the ratio of a shortest distance to a mixing rotor diameter according to an embodiment of the present disclosure;
FIG. 18 and FIG. 19 are schematic diagrams of a portion of an injection molding system 100 according to a specific embodiment of the present disclosure;
FIG. 20 is a top view of a composite according to a specific embodiment of the present disclosure;
FIG. 21 is a top view of a composite according to a specific embodiment of the present disclosure; and
FIG. 22 is a top view of a composite according to a specific embodiment of the present disclosure.

### DETAILED DESCRIPTION OF THE EMBODIMENTS

### [Cross reference of related applications]

This application claims the benefit of the U.S. Provisional Application Serial No. 63/236,051, filed on August 23, 2021, the U.S. Provisional Application Serial No. 63/236,044, filed on August 23, 2021, the U.S. Provisional Application Serial No. 17/582,798, filed on January 24, 2022, and the Taiwan Patent Application Serial No. 111131135, filed on August 18, 2022, the subject matters of which are incorporated herein by reference.

The description below provides various different embodiments or examples for implementing different features of the subject matter. The specific examples of components and configurations are described below to simplify the present disclosure. It should be noted that these examples are exemplary and are not to be intended to be restrictive. In the description below, a first feature formed on/over or above a second feature may also include a specific embodiment in which the first feature and the second feature are formed in a direct contact manner, and may include a specific embodiment in which an additional feature is formed between the first feature and the second feature in a way that the first feature and the second feature may not be in direct contact. Moreover, numerals and/or alphabetical symbols may be repeated in the various embodiments of the present disclosure. Such repetition is intended for simplicity and clarity, and does not represent relations between the specific embodiments and/or configurations discussed herein.

Moreover, the relative spatial terms used in the literature, for example, "under", "below", "underneath", "above" and "on/over" are for better describing the relation of one element or feature with respect to another element or feature, as shown in the drawings. In addition to the directions depicted in the drawings, the relative spatial terms are also intended to cover different directions of a device in use or operation. An apparatus may be orientated by other means (rotated by 90 degrees or having another orientation), and descriptive relative spatial terms used in the literature may also be correspondingly interpreted.

Despite that the numerical ranges and parameters setting forth the broadest ranges of the present disclosure are approximate values, the numerical values disclosed in the specific embodiments are reported as precisely as possible. However, all numerical values inevitably contain certain errors caused by standard errors discovered in corresponding test measurements. Moreover, the term "about" or 'approximately" used in the literature usually means that a value within 10%, 5%, 1%, or 0.5% of a rated value or range. Alternatively, the term "about" or 'approximately" refers to that a numerical value is considered to be within an acceptable standard error of an average value by a person skilled in the art. Apart from operation/working embodiments, or unless otherwise specified by other means, numerical ranges, quantities, values and percentages, for example, material quantities, lengths of durations, temperatures, operating conditions, ratios of quantity and the like disclosed in the literature, should be understood as modified by the term "substantially", "about" or "approximately" in all circumstances. Thus, unless otherwise specified, the numerical parameters given in the disclosure and the appended claims may be approximate values variable according to requirements. At least, each numerical parameter is interpreted in terms of the number of significant digits reported and by applying ordinary rounding. In the literature, a range may be represented as from one end point to another end point or between the two end points. Unless otherwise specified, all ranges disclosed in the literature are inclusive of the end points.

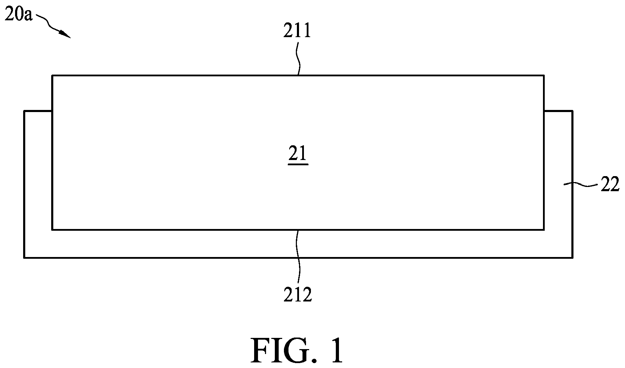

FIG. 1 shows a schematic diagram of a composite according to a specific embodiment of the present disclosure. A composite 20a includes a foam structure 21 and a flexible layer 22. In some embodiments, the foam structure 21 is disposed on the flexible layer 22. In some embodiments, the flexible layer 22 envelops the foam structure 21. In some embodiments, the foam structure 21 is in contact with the flexible layer 22. In some embodiments, the foam structure 21 and the flexible layer 22 are conformal. In some embodiments, the foam structure 21 is exposed from the flexible layer 22. In some embodiments, the flexible layer 22 covers the foam structure 21. In some embodiments, the composite 20a has a first surface 211 and a second surface 212 opposite to the first surface 211, wherein the second surface 212 is in contact with the flexible layer 22.

In some embodiments, the foam structure 21 includes a molding material. In some embodiments, the foam structure 21 is formed by a molding material. In some embodiments, the molding material includes a polymeric material and a foaming agent. In some embodiments, the polymeric material includes ethylene vinyl acetate (EVA), styrene-ethylene-butylene-styrene (SEBS), thermoplastic polyurethane (TPU), thermoplastic polyester elastomer (TPEE), and the like. In some embodiments, the polymeric material may include a foam material.

In some embodiments, the foaming agent includes physical or chemical additives that release gas and thereby form bubbles. In some embodiments, the foaming agent includes any type of physical foaming agent known to a person of ordinary skill in the art. In some embodiments, the foaming agent includes a supercritical fluid. The supercritical fluid may include an inert gas such as carbon dioxide, or nitrogen, hydrocarbons, chlorofluorocarbons or mixtures thereof. Technical details of mixing a polymeric material and a foaming agent are considered to be matters of the prior art, and are omitted herein. The foaming agent may be supplied by any flowable physical state, such as a gas, liquid or supercritical fluid. In some embodiments, the foaming agent is in a supercritical state.

In some embodiments, the foam structure 21 has a density equal to or less than 0.4 g/cm³. In some embodiments, when the foaming agent includes a physical foaming agent, the foam structure 21 of the present disclosure may have a density equal to or less than 0.4 g/cm³. In some embodiments, when the foaming agent includes a physical foaming agent, the foam structure 21 of the present disclosure may have a density between 0.1g/cm³ and 0.4 g/cm³.

In some embodiments, the foam structure 21 has a density equal to or less than 0.4 g/cm³. In some embodiments, when the foaming agent includes a physical foaming agent, the foam structure 21 may have a density equal to or less than 0.4 g/cm³. In some embodiments, when the foaming agent includes a physical foaming agent, the foam structure 21 of the present disclosure may be between 0. 1g/cm³ and 0.4 g/cm³.

In some embodiments, the thickness of the flexible layer 22 is uniform. In some embodiments, the flexible layer 22 includes a polymeric material. The polymeric material of the flexible layer 22 may be similar to or different from the polymeric material of the molding material. In some embodiments, the flexible layer 22 may be replaced by a non-flexible layer (not shown), which includes a fabric material, a leather material, a polymeric material and the like.

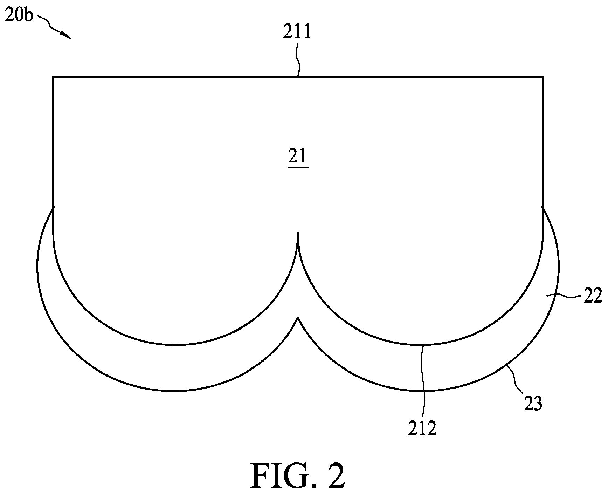

FIG. 2 shows a schematic diagram of a composite according to a specific embodiment of the present disclosure. In some embodiments, the present disclosure provides a composite 20b as shown in FIG. 2. In some embodiments, referring to FIG. 2, the composite 20b includes a curved surface 23. In some embodiments, the flexible layer 22 is curved to form the curved surface 23, and the foam material 21 and the flexible layer 22 are conformal. In some embodiments, the composite 20b has a first surface 211 and a second surface 212 opposite to the first surface 211, wherein the second surface 212 is in contact with the flexible layer 22. The curved surface 23 and the second surface 212 are conformal.

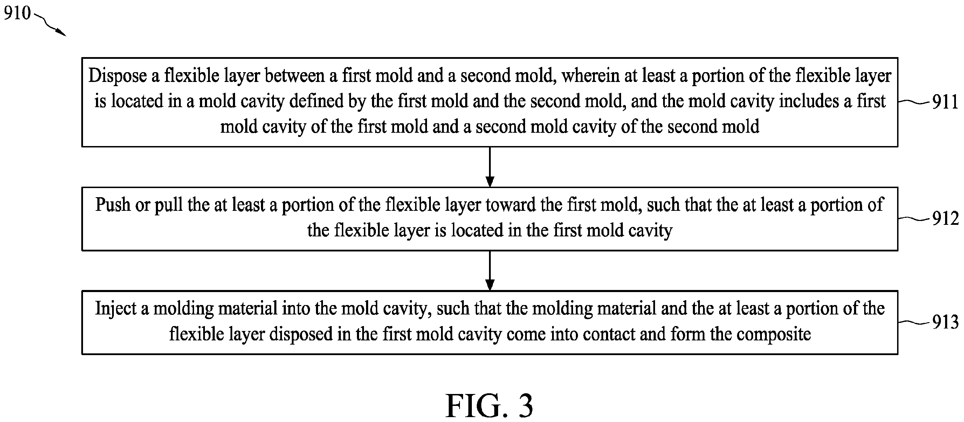

The present disclosure discloses a method of manufacturing a composite. The method includes numerous operations, which are described and illustrated in an order that is not to be construed as a limitation to an order of the operation. FIG. 3 shows a flowchart of a method of manufacturing a composite according to a specific embodiment of the present disclosure. In some embodiments, the method of manufacturing the composite 20a and the composite 20b may be formed by the method shown in FIG. 3. In some embodiments, referring to FIG. 3, method 910 of manufacturing the composite 20a and the composite 20b includes the following steps.

Step 911 includes disposing a flexible layer between a first mold and a second mold, wherein at least a portion of the flexible layer is located in a mold cavity defined by the first mold and the second mold, and the mold cavity includes a first mold cavity of the first mold and a second mold cavity of the second mold.

Step 912 includes pushing or pulling the at least a portion of the flexible layer toward the first mold, such that the at least a portion of the flexible mold is placed in the first mold cavity.

Step 913 includes injecting a molding material into the mold cavity, such that the molding material and the at least a portion of the flexible layer in the first mold come into contact and form the composite.

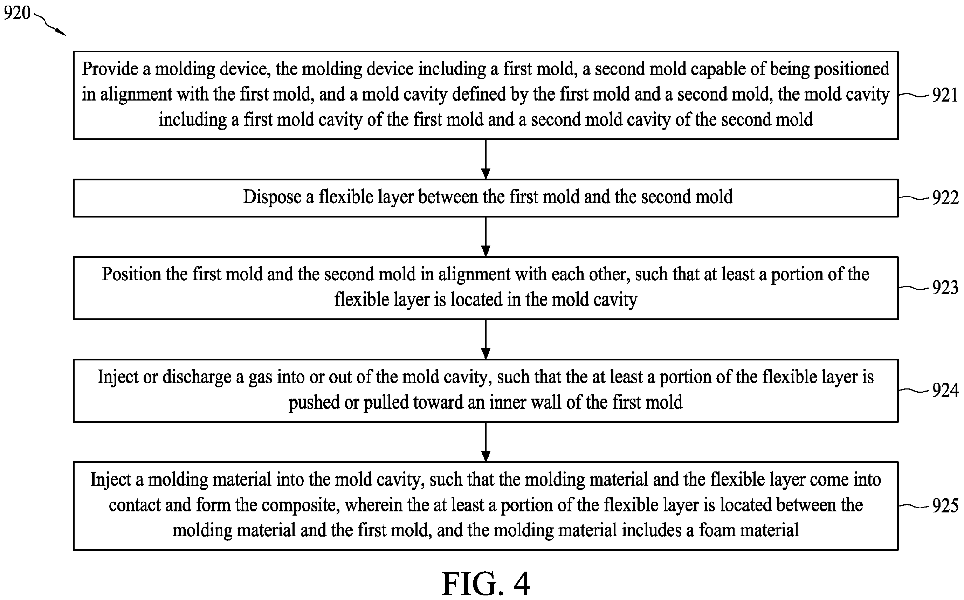

The present disclosure discloses a method of manufacturing a composite including a molding material and a flexible layer. The method includes numerous operations, which are described and illustrated in an order that is not to be construed as a limitation to an order of the operation. FIG. 4 shows a flowchart of a method of manufacturing a composite including a molding material and a flexible layer according to a specific embodiment of the present disclosure. In some embodiments, the method of manufacturing the composite 20a and the composite 20b may be implemented by the method shown in FIG. 4. In some embodiments, referring to FIG. 4, method 920 of manufacturing the composite 20a and the composite 20b includes the following steps.

Step 921 includes providing a molding device, wherein the molding device includes a first mold, a second mold capable of being positioned in alignment with the first mold, and a mold cavity defined by the first mold and the second mold, and the mold cavity includes a first mold cavity of the first mold and a second mold cavity of the second mold.

Step 922 includes disposing a flexible layer between the first mold and the second mold.

Step 923 includes positioning the first mold in alignment with the second mold such that at least a portion of the flexible layer is located in the mold cavity.

Step 924 includes injecting or discharging a gas into or out of the mold cavity, such that the at least a portion of the flexible layer is pushed or pulled toward an inner wall of the first mold.

Step 925 includes injecting a molding material into the mold cavity, contacting the molding material and the flexible layer and forming the composite, wherein the at least a portion of the flexible layer is located between the molding material and the first mold and the molding material includes a foam material.

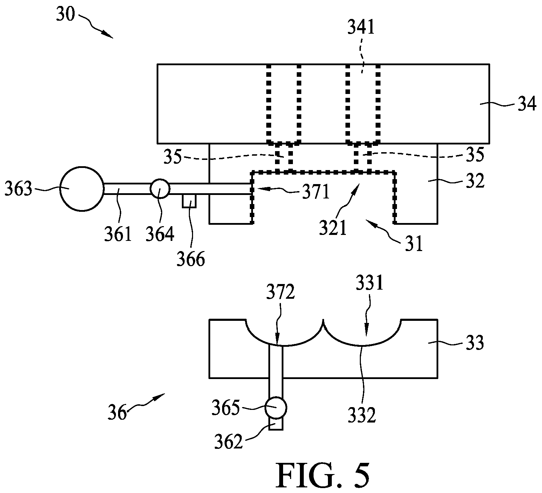

FIG. 5 to FIG. 12 show schematic diagrams of demonstration operations of a method of manufacturing a composite according to a specific embodiment of the present disclosure. The composite 20b is manufactured in FIG. 5 to FIG. 12 as an example; however, the present disclosure is not limited to the example above. In some embodiments, referring to FIG. 5, the method 920 includes step 921, which includes providing a molding device 30, wherein the molding device 30 includes a first mold 33, a second mold 32 capable of being positioned in alignment with the first mold 33, and a mold cavity 31 defined by the first mold 33 and the second mold 32, and the mold cavity 31 includes a first mold cavity 331 of the first mold 33 and a second mold cavity 321 of the second mold 32.

In some embodiments, referring to FIG. 5, the molding device 30 includes an upper mold 34 and a mold located below the upper mold 34. In some embodiments, the mold includes the second mold 32 below the upper mold 34 and the first mold 33 opposite to the second mold 32. The mold cavity 31 may be defined by the first mold cavity 331 of the first mold 33 and the second mold cavity 321 of the second mold 32. In some embodiments, the second mold 32 is an upper mold and the first mold 33 is a lower mold.

In some embodiments, the second mold 32 and the first mold 33 are separated from each other. In some embodiments, the second mold 32 and the first mold 33 may be complementarily positioned in alignment with each other and separable from each other. In some embodiments, the mold cavity 31 is defined when the second mold 32 and the first mold 33 are complementarily positioned in alignment with each other. In some embodiments, an inner sidewall 332 of the first mold 33 is curved. In some embodiments, the inner sidewall 332 of the first mold 33 is concave surface, a convex surface or a curved surface including a combination of concave and convex surfaces.

In some embodiments, at least one feed port 35 is provided on the molding device 30. In some embodiments, the feed port 35 is provided above the second mold 32 or the first mold 33 and is in communication with the mold cavity 31, the second mold 32, the second mold cavity 321 or the first mold cavity 331. For simplicity and clarity, the mold depicted in FIG. 5 has two feed ports 35; however, it should be noted that such example is illustrative and is not to be construed as a limitation to the embodiments. A person of ordinary skill in the art could easily understand that one mold may include one or more feed ports 35 in communication with the first mold cavity 331 or the second mold cavity 321.

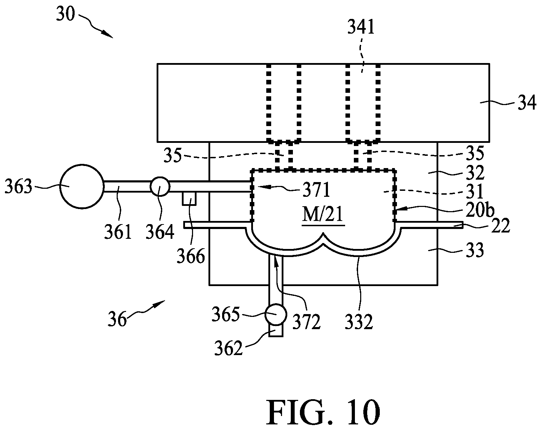

The feed port 35 receives a molding material into the mold cavity 31. In some embodiments, the molding device 30 is provided with multiple feed ports 35. The molding material may be conveyed into the molding device 30 through the feed ports 35. In some embodiments, the feed ports 35 may have different widths or diameters. In some embodiments, a molding material M is injected into the mold cavity 31, and the foam structure 21 (as shown in FIG. 10) is formed in the mold cavity 31 after a period of time.

In some embodiments, the upper mold 34 includes openings 341. Each of the openings 341 extends and passes through the upper mold 34. The upper mold 34 may be mounted on the second mold 32 by screws, clamps, securing devices or objects similar to securing devices. In some embodiments, the material of the upper mold 34 is the same as the material of the second mold 32. In some embodiments, the width of the upper mold 34 is more than the width of the second mold 32 or the first mold 33.

In some embodiments, the molding device 30 further includes one or more pressure regulation systems 36. In some embodiments, the inner sidewall 332 defines the first mold cavity 331, and a connecting point 372 is connected to the first mold cavity 331. In some embodiments, a connecting point 371 is connected to the second mold cavity 321. In some embodiments, the connecting points 371 and 372 are configured to allow a fluid or a gas to enter or exit the molding device 30. The positions, shapes and numbers of the connecting points 371 and 372 are not specifically defined, and are adjustable according to requirements. In some embodiments, the connecting points 371 and 372 are holes.

The pressure regulation system 36 may include a first gas conduit 361, a second gas conduit 362, a gas source 363, a first valve 364, a second valve 365 and a pressure sensing unit 366. The first gas conduit 361 is coupled to the connecting point 371, and the other end of the first gas conduit 361 is coupled to the gas source 363. In some embodiments, the gas source 363 is configured to supply a fluid or a gas, and an appropriate fluid or gas may be provided according to requirements. For example, the fluid or gas may be air or an inert gas; however, the present disclosure is not limited to the examples above. In some embodiments, one end of the first gas conduit 361 is coupled to the connecting point 372.

In some embodiments, the connecting points 371 and 372 are configured to supply a gas or discharge a gas. The first valve 364 is disposed at the first gas conduit 361, and is for controlling whether the gas from the gas source 363 is to enter the mold cavity 31 via the first gas conduit 361 and the connecting point 371. In some embodiments, when the first valve 364 is open and the second valve 365 is closed, the fluid or gas is supplied to the mold cavity 31; when the first valve 364 is closed and the second valve 365 is open, at least a portion of the fluid or gas in the mold cavity 31 is discharged.

In some embodiments, the second gas conduit 362 is connected to the connecting point 372. The second valve 365 is disposed at the second gas conduit 362 and is configured to control whether the gas from the mold cavity 31 is to be discharged via the connecting point 372 and the second gas conduit 362. In some embodiments, the second gas conduit 362 is coupled to the connecting point 371.

In some embodiments, one end of the second gas conduit 362 is connected to the mold cavity 31, and the other end is in communication with a space of which the pressure is lower than the pressure in the mold cavity 31, for example, an external environment or a space having a negative pressure; however, the present disclosure is not limited to the examples above. In some embodiments, the first valve 364 and the second valve 365 are not opened concurrently.

The pressure sensing unit 366 is for sensing the pressure in the mold cavity 31. The pressure sensing unit 366 is not limited to any specific type, and any device capable of sensing a pressure and providing pressure information upon sensing the pressure in the mold cavity 31 may be used. The pressure regulation system 36 changes a condition of a gas entering/exiting the mold cavity 31 according to the pressure information to thereby adjust the pressure in the mold cavity 31, such that the manufactured composites 20a and 20b have predetermined shapes and performance as required.

In some embodiments, the pressure sensing unit 366 is provided in the mold cavity 31, the first gas conduit 361 or the second gas conduit 362. In some embodiments, the pressure sensing unit 366 is provided in the mold cavity 31 and away from the feed port 35. In some embodiments, the pressure regulation system 36 has multiple pressure sensing units 366. The number and position of the multiple pressure sensing units 366 are not specifically defined. For example, the multiple pressure sensing units 366 may be arranged on the inner sidewall of the mold cavity 31 and spaced from one another, and/or on any positions in the first gas conduit 361, and/or on any positions in the second gas conduit 362; however, the present disclosure is not limited to the examples above.

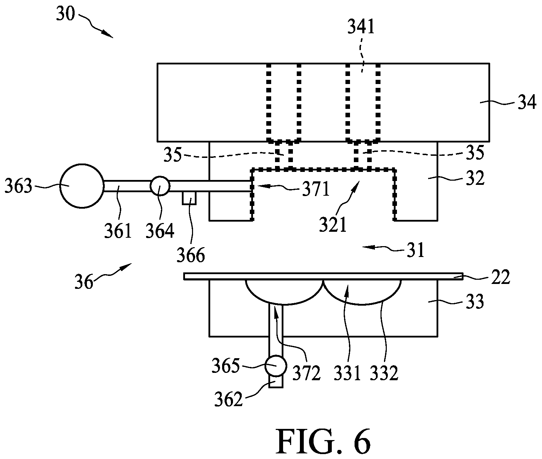

In some embodiments, step 920 includes step 922. Referring to FIG. 6, step 922 includes disposing the flexible layer 22 between the first mold 33 and the second mold 32. In some embodiments, the flexible layer 22 is provided on the first mold cavity 331 of the first mold 33. In some embodiments, when the flexible layer 22 is provided on the first mold cavity 331 of the first mold 33, the flexible layer 33 is aligned with the first mold 33 via at least one locating unit (not shown) of the first mold 33. In some embodiments, in step 922, the first mold 33 and the second mold 32 are separated from each other. In some embodiments, in top view, a portion of the flexible layer 12 overlapping with the first mold cavity 331 is not in contact with the first mold 33. In some embodiments, the flexible layer 12 is in contact with an outer periphery of the first mold 33, and is supported by the outer periphery of the first mold 33. In some embodiments, a portion of the flexible layer 12 is provided outside the first mold 33, and in top view, the portion of the flexible layer 12 provided outside the first mold 33 does not overlap the first mold 33.

In some embodiments, before the composites 20a and 20b are formed, the flexible layer 22 is softened so as to enhance the flexibility thereof. For example, to enhance flexibility, the flexible layer 22 may be heated by 120 °C infrared light for 40 to 45 seconds. For another example, the flexible layer 22 may be irradiated by ultraviolet light so as to enhance flexibility. With the enhanced flexibility, it is easier for the flexible layer 22 to become conformal with the inner sidewall 332 of the first mold 33 during the molding process. In step 922, the flexible layer 22 is not yet conformal with the inner sidewall 332, and a portion of the flexible layer 22 is not in contact with the inner sidewall 332.

In some embodiments, the flexible layer 22 may first be softened by a heater to enhanced flexibility, and the flexible layer 22 is then provided on the first mold cavity 331 of the first mold 33. In some embodiments, the flexible layer 22 is first provided on the first mold cavity 331 of the first mold 33, and the flexible layer 22 is then softened by a heater to enhanced flexibility. In some embodiments, the flexible layer 22 with enhanced flexibility is provided on the first mold cavity 331 of the first mold 33.

In some embodiments, method 910 includes step 911. Referring to FIG. 5 and FIG. 6, step 911 includes disposing the flexible layer 22 between the first mold 33 and the second mold 32, wherein at least a portion of the flexible layer 22 is located in the mold cavity 31 defined by the first mold 33 and the second mold 32, and the mold cavity 31 includes the first mold cavity 331 of the first mold 33 and the second mold cavity 321 of the second mold 32.

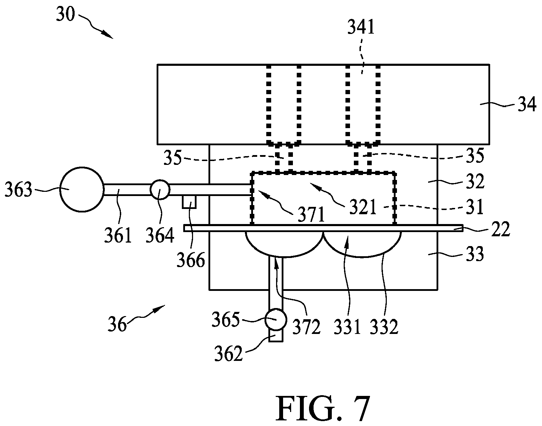

In some embodiments, step 920 includes step 923. Referring to FIG. 7, step 923 includes positioning the first mold 33 in alignment with the second mold 32 such that at least a portion of the flexible layer 22 is located in the mold cavity 31. In some embodiments, the second mold 32 is provided above the first mold 33, so as to define the mold cavity 31 by the second mold cavity 321 of the second mold 32 and the first mold cavity 331 of the first mold 33. In some embodiments, the second mold cavity 321 is provided between the flexible layer 22 and the second mold 32. The flexible layer 22 is provided in the mold cavity 31 and between the second mold cavity 321 and the first mold cavity 331. In some embodiments, by positioning the second mold 32 and the first mold 33 in alignment with each other, the position of the flexible layer 22 is fixed between the first mold 33 and the second mold 32. In some embodiments, in step 923, the flexible layer 22 is simultaneously in contact with the periphery of the first mold 33 and the periphery of the second mold 32, and the flexible layer 22 is sandwiched between the first mold 33 and the second mold 32. In some embodiments, the flexible layer 22 sandwiched between the first mold 33 and the second mold 32 is capable of moving slightly.

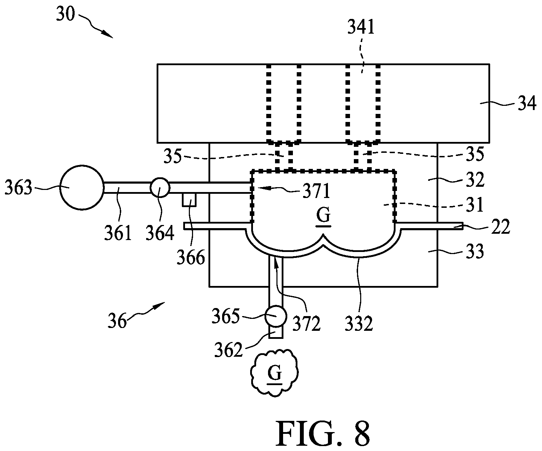

In some embodiments, step 910 includes step 912. Referring to FIG. 8, step 912 includes pushing or pulling the flexible layer 22 toward the first mold 33, such that at least a portion of the flexible layer 22 is disposed in the first mold cavity 331. In some embodiments, step 920 includes step 924, which includes injecting or discharging a gas G into or out of the mold cavity 31, such that the at least a portion of the flexible layer 22 is pushed or pulled toward the inner sidewall 332 of the first mold 33 by the gas G.

In some embodiments, a portion of the flexible layer 22 in the mold cavity 31 and the inner sidewall 332 of the first mold 33 are conformal. In some embodiments, the gas G is injected into the mold cavity 31 via the second mold 32 and/or the gas is extracted from the first mold cavity 31 via the first mold 33, so as to adhere a portion of the flexible layer 22 onto the inner sidewall 332 of the first mold 33. In some embodiments, the portion of the flexible layer 22 located in the mold cavity 31 is stretched. In some embodiments, the flexible layer 22 covers the inner sidewall 332 of the first mold 33. In some embodiments, another portion of the flexible layer 22 is provided between the second mold 32 and the first mold 33. In some embodiments, to have the flexible layer 22 and the inner sidewall 332 of the first mold 33 be conformal, the position of the flexible layer 22 may be slightly moved when the flexible layer 22 comes into contact with the second mold 32 and the first mold 33.

In some embodiments, the gas G is injected into the mold cavity 31 via the first gas conduit 361, and the gas G pushes the flexible layer 22 toward the inner sidewall 332 of the first mold 33. In some embodiments, the gas G is injected into the mold cavity 31 via the first gas conduit 361, and the gas G pushes the flexible layer 22 until the flexible layer 22 comes into contact with the inner sidewall 332 of the first mold 33. In some embodiments, the first valve 364 is open when the gas G is injected. In some embodiments, the second valve 365 is closed when the gas G is injected.

In some embodiments, the gas G in the first mold cavity 331 of the first mold 33 is discharged from the mold cavity 31 via the second gas conduit 362, and the gas G pulls the flexible layer 22 toward the inner sidewall 332 of the first mold 33. In some embodiments, the gas G is discharged from the mold cavity 31 via the second gas conduit 362. In some embodiments, the second valve 365 is open when the gas G is discharged. In some embodiments, the first valve 364 is open when the gas G is discharged.

In some embodiments, the gas G is injected into the mold cavity 31 via the first gas conduit 361 and is simultaneously discharged from the mold cavity 31 via the second gas conduit 362, such that the flexible layer 22 moves toward the inner sidewall 332 of the first mold 33.

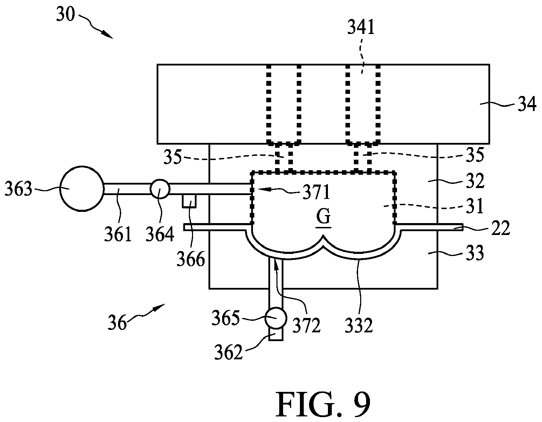

In some embodiments, method 910 includes step 913. Referring to FIG. 9 to FIG. 10, step 913 includes injecting a molding material M into the mold cavity 31, such that the molding material M and the at least a portion of the flexible layer 22 disposed in the first mold cavity 331 of the first mold 33 come into contact and form the composite 20a. In some embodiments, method 920 includes step 925, which includes injecting the molding material M into the mold cavity 31, contacting the molding material M and the flexible layer 22 and forming the composite 20b, wherein at least a portion of the flexible layer 22 is located between the molding material M and the first mold 33, and the molding material M includes a foam material. In some embodiments, the molding material M includes a polymeric material and a foaming agent.

In some embodiments, referring to FIG. 9, before step 913 or step 925, method 910 and method 920 further include providing the mold cavity 31 with a first predetermined pressure before injecting or ejecting the molding material M into the mold cavity 31 of the molding device 30. In some embodiments, with the pressure regulation system 36 connected to the mold cavity 31, the gas G is injected into the mold cavity 31, and it is sensed that the mold cavity 31 has the first predetermined pressure before the molding material M is ejected or injected into the mold cavity 31. In some embodiments, the gas G is injected into the mold cavity 31 via the second gas conduit 361. In some embodiments, depending on requirements, the gas G is any appropriate gas, for example, air; however, the present disclosure is not limited to the example above. In some embodiments, once the molding device 30 has the first predetermined pressure, ejecting or injecting of the molding material M starts.

In some embodiments, the pressure sensing unit 366 senses the pressure in the mold cavity 31 is atmospheric pressure. In some embodiments, the first valve 364 is open, and so the gas G is injected into the mold cavity 31 via the first gas conduit 361. In some embodiments, when the feed port 35 is closed, the gas G is injected into the mold cavity 31 via the pressure regulation system 36. In some embodiments, the gas G is injected into the mold cavity 31 via the feed port 35.

In some embodiments, while the gas G is being injected into the mold cavity 31, the pressure in the mold cavity 31 is continuously being sensed. In some embodiments, the pressure sensing unit 366 continues sensing the pressure in the mold cavity 31, and the gas G is injected into the mold cavity 31 until the pressure sensing unit 366 senses that the mold cavity 31 has the first predetermined pressure. Then, the first valve 364 and the second valve 365 of the pressure regulation system 36 are closed, and injecting of the gas G is into the mold cavity 31 is stopped. In some embodiments, the first predetermined pressure is more than the atmospheric pressure. In some embodiments, the first predetermined pressure is less than the atmospheric pressure. In some embodiments, the capacity of the mold cavity 31 is 800 cc, and the first predetermined pressure is 25 kg/cm³. In some embodiments, the mold cavity 31 includes 20 liters of the gas G.

In some embodiments, before step 913 or step 925, the mold cavity 31 has the first predetermined pressure, and both of the first valve 364 and the second valve 365 of the pressure regulation system 36 are closed.

In some embodiments, referring to FIG. 10, the molding material M is injected or ejected into the mold cavity 31, and the molding material M and the flexible layer 22 come into contact. In some embodiments, the molding material M expands and foams in the mold cavity 31. Once the molding material M is solidified, the molding material M forms a foam structure 21 and comes into contact with the flexible layer 22 to together form the composite 20b. In some embodiments, the flexible layer 22 covers a portion of the foam structure 21. In some embodiments, a portion of the foam structure 21 is joined with a portion of the flexible layer 22 in the mold cavity 31. In some embodiments, the foam structure 21 and the flexible layer 22 fill up the mold cavity 31.

In some embodiments, while the molding material M is injected or ejected into the mold cavity 31 of the molding device 30, the pressure in the mold cavity 31 changes rapidly, and the pressure sensing unit 366 continuously senses the pressure in the mold cavity 31. In some embodiments, the molding material M is injected or ejected into the mold cavity 31, and the first predetermined pressure is applied to the molding material M.

In some embodiments, the molding material M is injected or ejected via the feed port 35 into the mold cavity of the molding device 30, so as to increase the pressure in the mold cavity 31. In some embodiments, the pressure in the mold cavity 31 of the molding device 30 rises to above the first predetermined pressure. In some embodiments, the pressure in the mold cavity 31 of the molding device 30 rises from the first predetermined pressure to a second predetermined pressure.

In some embodiments, once the molding material M is injected or ejected to the mold cavity 31 having the first predetermined pressure, the pressure in the mold cavity 31 is increased, and so the setting of the second predetermined pressure ensures that the mold cavity 31 is kept within an appropriate pressure range. In some embodiments, once the mold cavity 31 has reached the second predetermined pressure, injecting of the molding material M into the mold cavity 31 is stopped.

In some embodiments, the molding material M includes a polymeric material and a foaming agent in a predetermined proportion. In some embodiments, the molding material M has a predetermined weight. In some embodiments, the molding material M is injected or ejected into the mold cavity 31 having the first predetermined pressure for a duration of less than 1 second. In some embodiments, because the mold cavity 31 has the first predetermined pressure, the duration of filling by the molding material M can be less than 0.5 second. During the injecting or once the injecting is complete, the pressure sensing unit 366 in real time senses the pressure in the mold cavity 31 and provides pressure information, so that the pressure regulation system 36 is capable of adjusting the pressure in the mold cavity 31 and keeping the pressure in the mold cavity 31 to be within a predetermined pressure range. In some embodiments, during the injecting or ejecting, the temperature of the molding material M is more than the temperature of the molding device 30.

In some embodiments, before step 913 or step 925, method 910 and method 920 further include discharging a portion of the gas G from the mold cavity 31 after injecting the gas G into the mold cavity 31. In some embodiments, method 910 and method 920 further include foaming the molding material M in the mold cavity 31, and while the molding material M foams in the mold cavity, discharging at least a portion of the gas G from the mold cavity 31 for a duration of less than 1 second by the pressure regulation system 36. Since the at least a portion of the gas G is discharged, the foam material 21 formed by the molding material after the foaming may have a lower density. In some embodiments, at least a portion of the gas G is discharged from the mold cavity via the first gas conduit 364 and/or the second gas conduit 365. In some embodiments, at least a portion of the gas G is discharged from the mold cavity 31 during foaming of the molding material M. In some embodiments, while the at least a portion of the gas G is being discharged, the pressure in the mold cavity 31 reduces from the second predetermined pressure.

For example, the capacity of the mold cavity is 800 cc, the first predetermined pressure is 25 kg/cm³ (the mold cavity 31 including 20 liters of the gas G), the gas G is discharged from the mold cavity 31 within 0.3 second to 0.6 second, and the speed of discharging the gas G is 33 L/sec to 66 L/sec.

In some embodiments, when the pressure sensing unit 366 senses that the pressure in the mold cavity 31 is greater than the second predetermined pressure, a portion of the gas G in the mold cavity 31 is discharged until the pressure in the mold cavity 31 is within the predetermined pressure range. In some embodiments, the predetermined pressure range is between the first predetermined pressure and the second predetermined pressure. In some embodiments, the first valve 364 is open, and a portion of the gas G in the mold cavity M is discharged via the first gas conduit 364. In some embodiments, the second valve 365 is open, and a portion of the gas G in the mold cavity M is discharged via the second gas conduit 364.

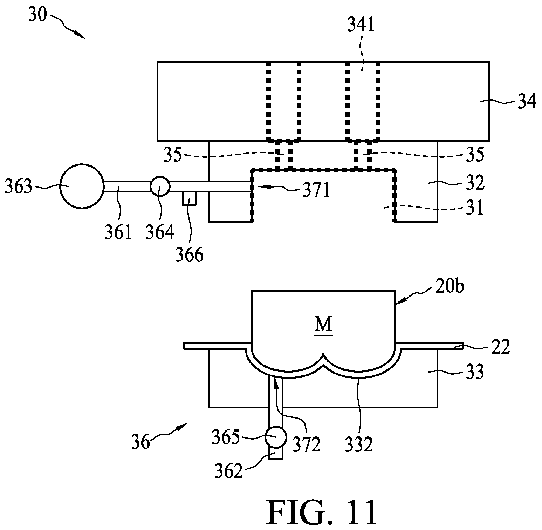

In some embodiments, method 910 and method 920 further include removing the composite 20b from the molding device 30. In some embodiments, referring to FIG. 11, the first mold 33 and the second mold 32 are separated, and the composite 20b is further taken out from the molding device 30. In some embodiments, the first mold 33 is fixed and the second mold 32 is moved, so as to separate the first mold 33 and the second mold 32 from each other. In some embodiments, the second mold 32 is fixed and the first mold 33 is moved, so as to separate the first mold 33 and the second mold 32 from each other.

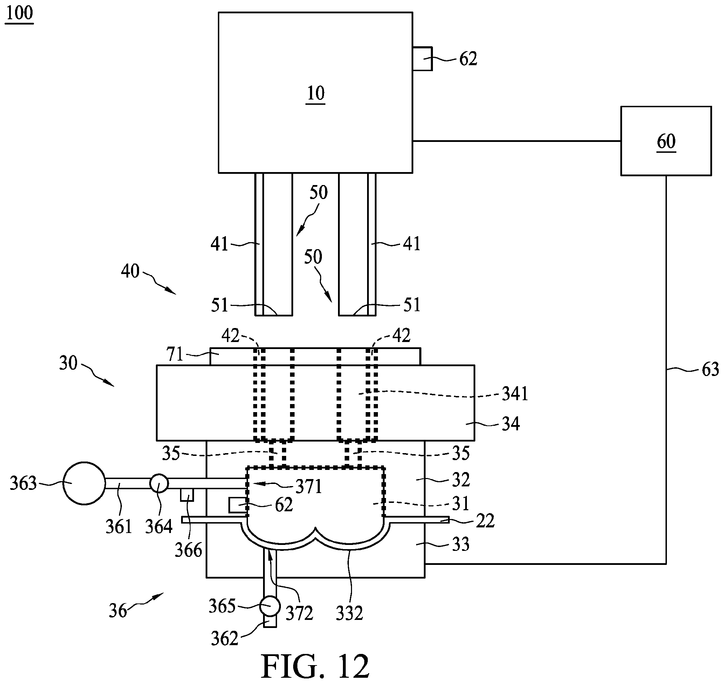

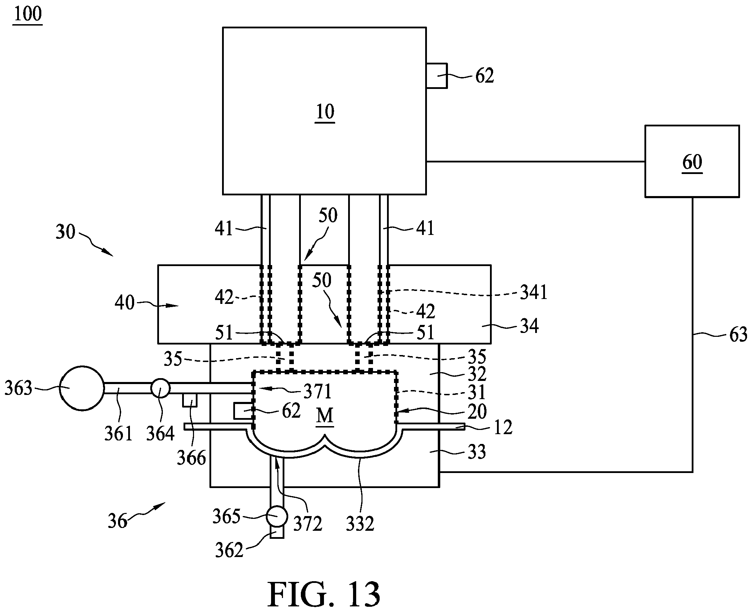

FIG. 12 and FIG. 13 shows schematic diagrams of an injection molding system according to a specific embodiment of the present disclosure. In some embodiments, referring to FIG. 12 and FIG. 13, the molding material M is produced by an extrusion system 10, and the extrusion system 10 directly injects the molding material M into the molding device 30. In some embodiments, the extrusion system 10 injects the molding material M into discharge passages 50, and the molding material M is ejected or injected from the extrusion system 10 into the molding device 30 via the discharge passages 50. In some embodiments, an injection molding system 100 includes the extrusion system 10, the discharge passages 50 and the molding device 30. In some embodiments, the extrusion system 10 corresponds to multiple discharge passages 50. For simplicity and clarity, two discharge passages 50 corresponding to one molding device 30 are depicted in FIG. 12 and FIG. 13; it should be noted that this example is illustrative and is not to be construed as limitations to the embodiments.

In some embodiments, the extrusion system 100 is connected or in communication with the discharge passages 50. The number of the discharge passages 50 is adjustable according to the properties of the molding material M. The discharge passages 50 extend in parallel and are arranged neighboring to each other. In some embodiments, the discharge passages 50 can individually accommodate the molding material M in the same or different quantities. The discharge passages 50 can individually discharge the molding material M in the same or different quantities into the molding device 30. In some embodiments, the discharge passages 50 can individually accommodate the molding material M in the same or different weights injected from the extrusion system 10. In some embodiments, the discharge passages 50 can individually accommodate the molding material M in the same or different volumes injected from the extrusion system 10. The discharge passages 50 can individually discharge the molding material M in the same or different volumes into the molding device 30. The discharge passages 50 can individually discharge the molding material M in the same or different volumes into the molding device 30. In some embodiments, the discharge passages 50 can individually operate under the same or different temperatures.

In some embodiments, each discharge passage 50 corresponds to one discharge port 51 away from the extrusion system 10. The feed port 35 is configured to connect to the discharge port 51, which is for extruding the molding material M into the feed port 35. In some embodiments, the discharge ports 51 may individually have the same or different widths of diameters, and so the molding material M may have the same or different flow speeds in the individual discharge ports 51. In some embodiments, the width or diameter of each discharge port 51 is adjusted according to the corresponding discharge passage 50. In some embodiments, the discharge passages 51 can individually extrude the molding material M in different qualities or volumes.

The discharge passages 50 may be synchronously or separately moved, extended or withdrawn. In some embodiments, the discharge port 51 of the discharge passage 50 may extend into the molding device 30 and be withdrawn from the molding device 30. In some embodiments, the discharge port 51 of the discharge passage 50 may extend into the corresponding feed port 35 and be withdrawn from the corresponding feed port 35.

In some embodiments, referring to FIG. 12, before the molding material M is injected into the mold cavity 31, the extrusion system 10 and the discharge passages 50 are away from the molding device 30. In some embodiments, the extrusion system 10 and the discharge passages 50 are moved to above the mold cavity 31. In some embodiments, the extrusion system 10 and the discharge passages 50 are positioned above the mold cavity 31. In some embodiments, the discharge passages 50 is aligned with the corresponding openings 341 of the upper mold 34 of the molding device 30.

In some embodiments, referring to FIG. 13, once the discharge passages 50 are aligned with the corresponding openings 341, the discharge passages 50 move toward the molding device 30 until the discharge passages 50 are accommodated by the corresponding openings 341 of the upper mold 34, and the discharge ports 51 are connected to the corresponding feed ports 35 of the molding device 30. In some embodiments, the openings 341 of the upper mold 34 are configured to accommodate the corresponding discharge passages 50. In some embodiments, the number of the openings 341 corresponds to the number of the discharge passages 50. In some embodiments, the discharge passages 50 move vertically toward the molding device 30 so that the discharge passages 50 are accommodated by the corresponding openings 341 of the upper mold 34. In some embodiments, each discharge passage 50 is at least partially encircled by the upper mold 34, and the discharge ports 51 are respectively connected to the corresponding feed ports 35.

Once the discharge ports 51 and connected to the corresponding feed ports 35, the discharge ports 51 and the corresponding feed ports 35 form flow channels of the molding material M, such that the discharge passages 50 become in communication with the feed ports 35 and the mold cavity 35, and the molding material M is ready to be injected into the mold cavity 31. The discharge ports 51 need to be tightly matched with the corresponding feed ports 35, so as to prevent the molding material M from leaking out of the molding device 30.

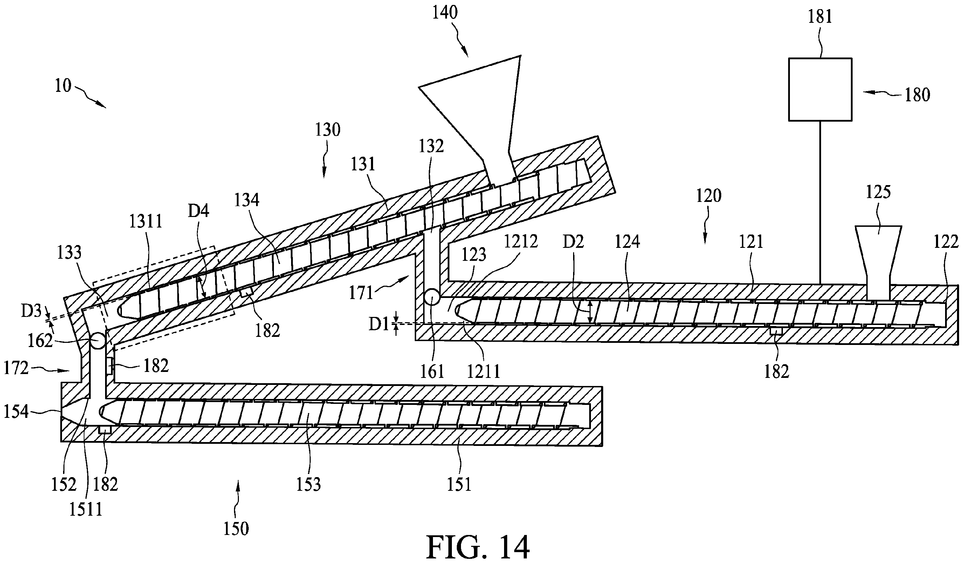

In some embodiments, referring to FIG. 14, the extrusion system 10 for manufacturing the molding material M includes a melting unit 120, a mixing unit 130, a foaming agent supply unit 140, an injection unit 150, a first flow control element 161, a second flow control element 162 and a monitoring module 180.

In some embodiments, the melting unit 120 is configured to convey the polymeric material. In some embodiments, the melting unit 120 includes a pressurizing cartridge 12, a first feed passage 122, a first discharge passage 123, and a pushing member 124. In some embodiments, the melting unit 120 further includes a feed hopper 125.

In some embodiments, the first feed passage 122 and the first discharge passage 123 are respectively arranged on two ends of the pressurizing cartridge 121. In some embodiments, the first feed channel 122 is in communication with an internal space 1211 and the pressurizing cartridge 121, and the first discharge channel 123 is in communication with an external space of the pressurizing cartridge 121, wherein the first feed passage 122 is configured to convey the polymeric material into the internal space 1211 of the pressurizing cartridge 121. In some embodiments, the feed hopper 125 is configured to convey the polymeric material to the internal space 1211 of the pressurizing cartridge via the first feed passage 122.

The pushing member 124 is configured to convey the polymeric material from the first feed passage 122 to the first discharge passage 123. In some embodiments, the pushing member 124 is arranged in the internal space 1211 of the pressurizing cartridge 121. In some embodiments, the pushing member 124 is arranged in the internal space 1211 of the pressurizing cartridge 121 between the first feed passage 122 and the first discharge passage 123, and is for pushing the polymeric material to the first discharge channel 123. In some embodiments, the pushing member 124 is rotatable relative to the pressurizing cartridge 121. In some embodiments, the polymeric material is conveyed from the first feed passage 122 to the first discharge passage 123 by rotation of the pushing member 124. In some embodiments, the pushing member 124 is incapable of moving in a direction parallel to the longitudinal axis of the pressurizing cartridge 121.

In some embodiments, the length of the pushing member 124 extends along the length of the pressurizing cartridge, a ratio of a shortest distance D1 between an inner sidewall 1212 of the pressurizing cartridge 121 to a diameter D2 of the pushing member 124 is within the range of 1:1500 and 1:4500, and the polymeric material can be uniformly melted by the melting unit 120. In some embodiments, the shortest distance D1 between the inner sidewall 1212 of the pressurizing cartridge 121 and the pushing member 124 is substantially equal to or less than 0.3 mm. In some embodiments, the shortest distance D1 between the inner sidewall 1212 of the pressurizing cartridge 121 and the pushing member 124 ranges between 0.01 and 0.05 mm.

The mixing unit 130 is configured to receive the polymeric material from the melting unit 120, and is configured to mix the polymeric material with a foaming agent so as to form a mixture of the polymeric material and the foaming agent. The mixing unit 130 includes a hollow mixing cartridge 131, a second feed passage 132, a second discharge passage 133 and a mixing rotor 134. In some embodiments, the mixture becomes the molding material M. In some embodiments, the mixture of the polymeric material and the foaming agent is uniformly mixed by the mixing unit 130 and form the molding material M.

The second feed passage 132 and the second discharge passage 133 are respectively arranged on two ends of the hollow mixing cartridge 131. In some embodiments, the second feed passage 132 is configured to convey the polymeric material. In some embodiments, the second discharge passage 133 is configured to convey and discharge the mixture.

The mixing rotor 124 is configured to mix the polymeric material and the foam material so as to form the mixture in the hollow mixing cartridge 131. In some embodiments, the mixing rotor 134 is arranged in the hollow mixing cartridge 131. In some embodiments, the mixing rotor 134 is arranged in the hollow mixing cartridge 131 between the second feed passage 132 and the second discharge passage 133, so as to stir the mixture in the hollow mixing cartridge 131. The mixing rotor 134 is rotatable so as to mix the polymeric material and the foaming agent, and conveys the mixture of the polymeric material and the foaming agent from the second feed passage 132 to the second discharge passage 133. In some embodiments, the mixing rotor 134 is incapable of moving in a direction parallel to a longitudinal axis of the hollow mixing cartridge 131.

In some embodiments, the length of the mixing rotor 134 extends along the length of the hollow mixing cartridge 131, a ratio of a shortest distance D3 between an inner sidewall 1311 of the hollow mixing cartridge 131 to a diameter D4 of the mixing rotor 134 is within the range of 1:1500 and 1:4500, and the mixture manufactured by the extrusion system 10 can be consistent and uniform. In some embodiments, the mixture can be divided into a plurality of parts, and the proportion of the foaming agent and the polymeric material of each part of the mixture manufactured by the extrusion system 10 is basically constant. In some embodiments, the proportion of the foaming agent and the polymeric material on a first position of the mixture is basically equal to the proportion of the foaming agent and the polymeric material on a second position of the mixture. In some embodiments, the shortest distance D3 between the inner sidewall 1311 of the hollow mixing cartridge 131 and the mixing rotor 134 is substantially equal to or less than 0.3 mm. In some embodiments, the shortest distance D3 between the inner sidewall 1311 of the hollow mixing cartridge 131 and the mixing rotor 134 is between 0.01 and 0.09 mm.

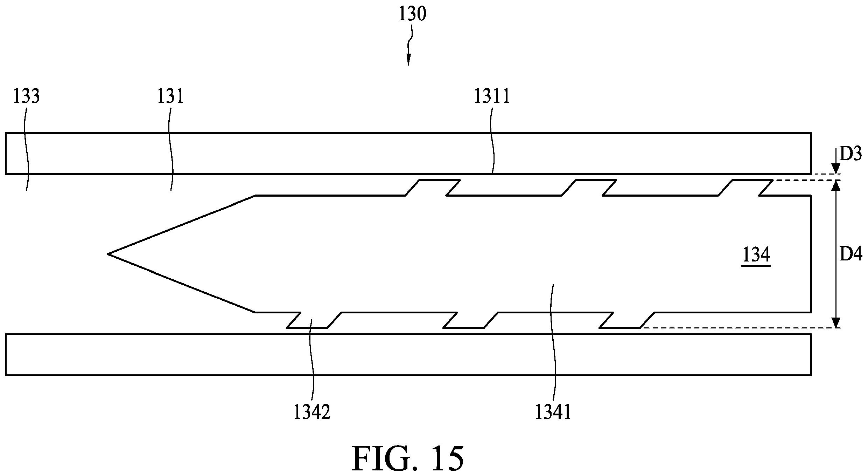

FIG. 15 shows an enlarged diagram of a portion of an extrusion system of an implementation form according to some embodiments of the present disclosure. To uniformly mix the melted polymeric material and the foaming agent in the hollow mixing cartridge 131, in some embodiments, referring to FIG. 14 and FIG. 15, the mixing rotor 134 further includes a circular cylinder 1341 rotatably arranged in the hollow mixing cartridge 131, and annular recessed portions 1342 arranged on an outer periphery of the cylinder 1341. Thus, when the cylinder 1341 rotates, the polymeric material and the foaming agent are stirred by the recessed portions 1343, thereby achieving the desired mixing effect. In some embodiments, the shortest distance D3 is a shortest distance between the recessed portion 1342 and the inner sidewall 1311 of the hollow mixing cartridge 131.

In some embodiments, when the shortest distance D3 is the shortest distance between the recessed portion 1342 and the inner sidewall 1311 of the hollow mixing cartridge 131, the shortest distance D3 ranges between 0.01 and 0.09 mm. In some embodiments, the diameter D4 of the mixing rotor 134 is between 45 and 75 mm. Table-1 lists the shortest distance D3, the diameter D4, and corresponding ratio of the shortest distance D3 between the recessed portion 1342 and the inner sidewall 1311 of the mixing cartridge 131 to the diameter D4 of the mixing rotor 134.

**Table-1**

| | | | | | | | | |
|---|---|---|---|---|---|---|---|---|
| Diameter D4 (mm) | 45 | | 55 | | 65 | | 75 | |
| Shortest distance D3 (mm) | 0.01 | 0.02 | 0.02 | 0.03 | 0.03 | 0.04 | 0.04 | 0.05 |
| D4/D3 | 4500 | 2250 | 2750 | 1833 | 2167 | 1625 | 1875 | 1500 |

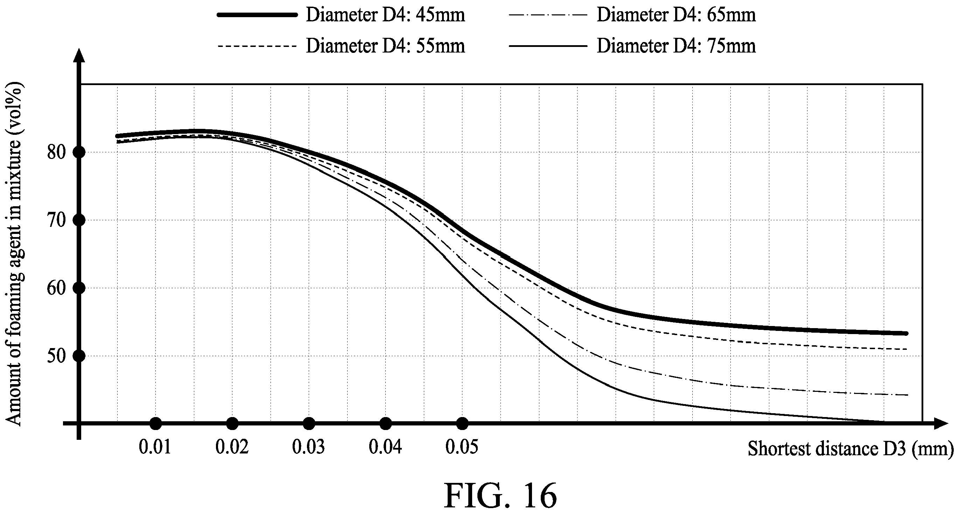

FIG. 16 shows a graph illustrating a relation between the amount of a foaming agent in a mixture and a shortest distance according to an embodiment of the present disclosure. In some embodiments, referring to FIG. 16, when the shortest distance D3 is substantially less than 0.01 mm, the amount of the foaming agent in the mixture is substantially more than 0.8/cm³. In some embodiments, if the amount of the foaming agent in the mixture is noticeably more than 0.8/cm³, the density of air bubbles in a predetermined amount of mixture after foaming is noticeably more than 180000/cm³.

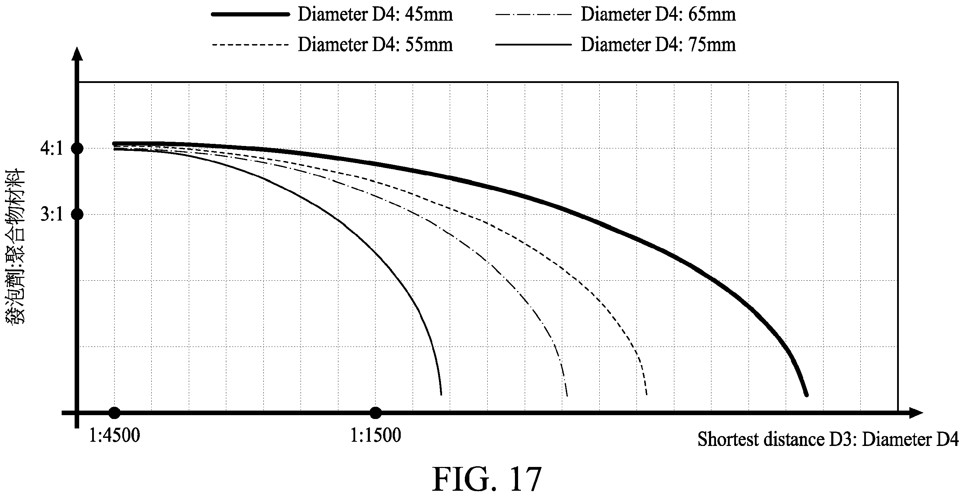

FIG. 17 shows a graph illustrating behaviors of the proportion between a foaming agent and a polymeric material versus the ratio of a shortest distance to a mixing rotor diameter according to an embodiment of the present disclosure. In some embodiments, when the ratio of the shortest distance D3 to the diameter D4 is within the range of 1:1500 and 1:4500, the uniformity of the foaming agent and the polymeric material is optimal. In other words, the mixing of the foaming agent and the polymeric material performed by the mixing rotor 134 is uniform and even. In some embodiments, when the ratio of the shortest distance D3 to the diameter D4 is within the range of 1:1500 and 1:4500, referring to FIG. 17, the proportion of the foaming agent and the polymeric material is between 4:1 and 3:1 in a predetermined amount of mixture. In some embodiments, the proportion of the foaming agent and the polymeric material is 1:1 in a predetermined amount of mixture. In some embodiments, if the proportion of the foaming agent and the polymeric material is between 4:1 and 3:1 in a predetermined amount of mixture, the proportion of bubbles and the polymeric material also ranges between 4:1 and 3:1 in a predetermined amount of mixture after foaming. In some embodiments, the proportion of bubbles and the polymeric material is approximately 4:1 in a predetermined amount of mixture after foaming.

In some embodiments, the melting unit 120 includes the hollow pressurizing cartridge 121 configured to accommodate the polymeric material and having a first pressure, and the mixing unit 130 includes the hollow mixing cartridge 131 having a second pressure. In some embodiments, to prevent backflow, the first pressure is more than the second pressure. In some embodiments, with a difference between the first pressure and the second pressure, the polymeric material is extracted from the melting unit 120 to the mixing unit 130. In some embodiments, a sensor 182 of the monitoring module 180 senses the first pressure in the melting unit 120. In some embodiments, a sensor 182 of the monitoring module 180 senses the second pressure in the melting unit 130.

The foaming agent supply unit 140 is connected to the mixing unit 130, and is configured to convey the foaming agent into the mixing unit 130. In some embodiments, the foaming agent supply unit 140 is located between the first flow control element 161 and the second flow control element 162. In some embodiments, the foaming agent supply unit 140 is arranged close to the first flow control element 161 and away from the second flow control element 162.

In some embodiments, a foaming agent source (not shown) is connected to the foaming agent supply unit 140, and is configured to supply any type of foaming agent known to a person skilled in the art. In some embodiments, the foaming agent is in a supercritical state after being introduced into the mixing unit 130 by the foaming agent supply unit 140.

In some embodiments, the first flow control element 161 is arranged on a position of a first interface 171 where the melting unit 120 is connected to the mixing unit 130. The first interface 171 is configured to introduce the polymeric material into the mixing unit 130 from the melting unit 120. The first interface 171 is located between melting unit 120 and the mixing unit 130. In some embodiments, the first interface 171 is configured to introduce the polymeric material into the hollow mixing cartridge 131 of the mixing unit 130 from the pressurizing cartridge 121 of the melting unit 120. In some embodiments, with the difference between the first pressure and the second pressure, the polymeric material is conveyed and/or extracted to the mixing unit 130 from the melting unit 120 via the first interface 171.

In some embodiments, the first flow control element 161 is arranged between the melting unit 120 and the mixing unit 130, and is configured to control the flow of the polymeric material from the melting unit 120 to the mixing unit 130. The first flow control element 161 may be a valve or a mobile cover.

In some embodiments, the first flow control element 161 is configured to switch between an open state and a closed state. The open state of the first flow control element 161 allows the polymeric material to flow from the melting unit 120 into the mixing unit 130, and the closed state of the first flow control element 161 prevents the polymeric material from returning to the melting unit 120 from the mixing unit 130.

In some embodiments, the first flow control element 161 is configured to maintain a pressure difference between the melting unit 120 and the mixing unit 130. In some embodiments, the first flow control element 161 is configured to maintain the pressure difference between the melting unit 120 and the mixing unit 130 by switching between the open state and the closed state, such that the polymeric material is prohibited from returning to the pressurizing cartridge 121 of the melting unit 120 from the hollow mixing cartridge 131 of the mixing unit 130. In some embodiments, the first flow control element 161 is configured to adjust the first pressure and/or the second pressure, so as to maintain the pressure difference between the first pressure and the second pressure. In some embodiments, when the first pressure is similar to the second pressure, the first flow control element 161 is in the closed state.

In some embodiments, the injection unit 150 is configured to receive the mixture discharged from the second discharge passage 133 of the mixing unit 130, and discharge the mixture from the injection unit 150. In some embodiments, the injection unit 150 is configured to inject the mixture, and the discharge passage 50 is in communication with the injection unit 150.

In some embodiments, the melting unit 150 includes a hollow metering cartridge 151 configured to accommodate the mixture. The hollow metering cartridge 151 has a hollow internal space 1511, which is in communication with the second discharge passage 133 and is configured to accommodate the mixture. The hollow metering cartridge 151 further includes a connecting passage 152 in communication with the internal space 1511 of the hollow metering cartridge 151, and a discharge member 153 slidably arranged in the internal space 1511 of the hollow metering cartridge 151 and configured to discharge the mixture from the hollow metering cartridge 151 via an outlet 154.

In some embodiments, the monitoring module 180 is configured to monitor the extrusion system 10 in real time. In some embodiments, the monitoring module 180 includes a central processor 181 and a sensor 182 electrically connected to or communicable with the central processor 181. In some embodiments, multiple sensors 182 are placed in the entire extrusion system 10 and are configured to sense at least one processing condition (for example, the flow rate or viscosity of the polymeric material along the melting unit 120, the amount of the molding material M accumulated in the injection unit 150, the first pressure in the melting unit 120, the second pressure in the mixing unit 130, a third pressure in the injection unit 150, the pressure difference between the first pressure and the second pressure, a pressure difference between the second pressure and the third pressure, the temperature of each unit, rotational speeds of the pushing member 124 and the mixing rotor 134, or the flow and amount of the foaming agent passing through the foaming agent supply unit 140), and may be, for example but not limited to, placed on a predetermined position of the extrusion system 10 (for example, the melting unit 120, the mixing unit 130, the injection unit 150, the foaming agent supply unit 140, the first interface 171, the second interface 172, the outlet 154, the first flow control element 161 or the second flow control element 162). For example, at least one sensor 182 is mounted at each unit and is for sensing processing conditions of the corresponding unit. In some embodiments, the sensor 182 is configured to detect the processing conditions and transmit, based on the detected processing conditions, signals or data to the central processor 181 for further analysis. The number of the sensors 182 is adjustable according to requirements.

In some embodiments, according to the processing conditions sensed by the sensor 182 and/or the analysis of the central processor 181, the monitoring module 182 may automatically monitor and in real time adjust the processing conditions of the corresponding position. The sensor 182 is not limited to any specific type, and any device capable of sensing processing conditions and providing information after the sensing may be used. The central processor 181 changes the processing conditions according to the information to thereby adjust the processing conditions of each unit, so as to form the molding material M having expected predetermined properties.

In some embodiments, the extrusion method of the molding material M including the polymeric material and the foaming agent includes transporting the polymeric material from the melting unit 120 to the mixing unit 130, transporting the foaming agent from the foaming agent supply unit 140 to the mixing unit 130, and mixing the polymeric material and the foaming agent in the mixing unit 130 so as to form the molding material M. The method further includes transporting the molding material M from the mixing unit 130 to the injection unit 150, and discharging the molding material M from the injection unit 150. In some embodiments, the molding material M enters the discharge passage 50 from the injection unit 150, and enters the molding device 30 from the discharge passage 50.

In some embodiments, again referring to FIG. 12 and FIG. 13, the injection molding system 100 further includes a control system 60. The control system 60 is configured to control the extrusion system 10, the discharge passage 50 and the molding device 30. In some embodiments, the control system 60 is configured to control in real time the extrusion system 10, the discharge passage 50 and the molding device 30. In some embodiments, the control system 60 is capable of communicating in real time with the monitoring module 180 of the extrusion system 10.

In some embodiments, the control system 60 further includes a central processor 61 and a plurality of sensors 62 electrically connected to or communicable with the central processor 61. In some embodiments, the sensors 61 are disposed in the entire injection system 100 and are configured to sense at least one processing condition (for example, the flow speed or viscosity of the molding material M passing through the discharge passage 50, the amount of the molding material M discharged from the discharge passage 50, and the pressure in the mold cavity 31) on a predetermined position (for example, the discharge passage 50 and the molding device 30, the discharge port 51, an alignment of the feed port 35 and the mold cavity 31) of the injection molding system 100. For example, at least one sensor 62 is mounted at the discharge port 51 and is for sensing the processing condition at the discharge port 51. In some embodiments, the sensor 62 is configured to detect the processing condition and transmit, based on the detected processing condition, signals or data to the central processor 61 for further analysis.

In some embodiments, the control system 60 controls when the discharge passage 50 is to be connected to the molding device 30. In some embodiments, a cable 63 is electrically connected among the control system 60, the extrusion system 10, the discharge passage 50 and the molding device 30. The cable 63 is configured to transmit signals from the molding device 30 to the extrusion system 10 and the discharge passage 50.

In some embodiments, the control system 60 is configured to process pressure information detected by the pressure sensing unit 366, and is configured to adjust the mixing condition of the extrusion system 10 and the amount and timing of extrusion of the discharge passage 50. In some embodiment, the pressure sensing unit 366 provides the pressure information to the control system 60, and the control system 60 adjusts the first valve 364 and the second valve 365 according to the pressure information. In some embodiments, the control system 60 adjusts, according to the pressure information, the state of a gas entering/exiting the mold cavity, and adjusts the timing and amount of the molding material M injected from the discharge passage 50 into the mold cavity 31. Thus, during injection molding, the amount of injection and the speed of injection are within appropriate or predetermined ranges, and the pressure in the mold cavity 31 is persistently within the appropriate or predetermined pressure range. In some embodiments, the control system 60 further controls feed conditions of the feed portion 35 and gas supply conditions of the gas source 363. In some embodiments, the control system 60 is electrically connected to the first valve 364, the second valve 365, the pressure sensing unit 366 and the feed port 35.

In some embodiments, the injection molding system 100 further includes a support device 40. The support device 40 is configured to promote joining of the discharge passage 50 and the molding device 30. The support device 40 may be located on any appropriate position of the injection molding system 100.

In some embodiments, the support system 40 is configured to support the discharge passage 50. In some embodiments, the support system 40 is for preventing the discharge passage 50 and the molding device 30 from being separated from each other during injection of the molding material M. In some embodiments, the control system 60 in real time controls the support system 40.

In some embodiments, the support device 40 includes a first element 41 and a second element 42 connected to each other, wherein the first element 41 protrudes from the extrusion system 10 or the discharge passage 50, and the second element 42 is disposed on each molding device 30; however, the present disclosure is not limited to the examples above. In some embodiments, the first element 41 and the second element 42 may be fastened tightly with each other; for example, the second element 42 is configured to receive the first element 41.

In some embodiments, the support device 40 is disposed on the mold cavity 31 of the molding device 30. In some embodiments, the first element 41 is disposed on the discharge passage 50, and the second element 42 is disposed on the molding device 30. In some embodiments, the second element 42 is disposed on the upper mold 34 of the molding device 30. In some embodiments, the first element 41 is a portion of the extrusion system 40 or the discharge passage 50, and the second element 42 is a portion of the molding device 30. In some embodiments, the first element 41 is a portion of the extrusion system 10 and is at the same time disposed near the discharge passage 50, and the second element 42 is disposed on or faces the upper mold 34 of the molding device 30. In some embodiments, the first element 41 and the second element 42 are connectable to each other, so as to tightly connect the discharge passage 50 with the upper mold 34 of the molding device 30.

In some embodiments, to prevent the extrusion system 10 and the molding device 30 from being separated from each other during injection of the molding device M, the first element 41 having been connected receives a force so as to press against the second element 42, wherein the force is equal to or more than a threshold. The threshold is adjustable according to the pressure in the mold cavity 31 and the diameter of the discharge port 51 or according to other factors.

The position and number of the first element 41 are adjustable according to requirements, and are not specifically defined. The position and number of the second element 42 are also adjustable according to requirements, and are not specifically defined. In some embodiments, the position and number of the second element 42 correspond to the position and number of the first element 41. In some embodiments, the first element 41 may be disposed on any appropriate position on the discharge passage 50, and the second element 42 may be disposed on any appropriate position on the molding device 30. In some specific embodiments, the second element 42 is disposed on the second mold 32.

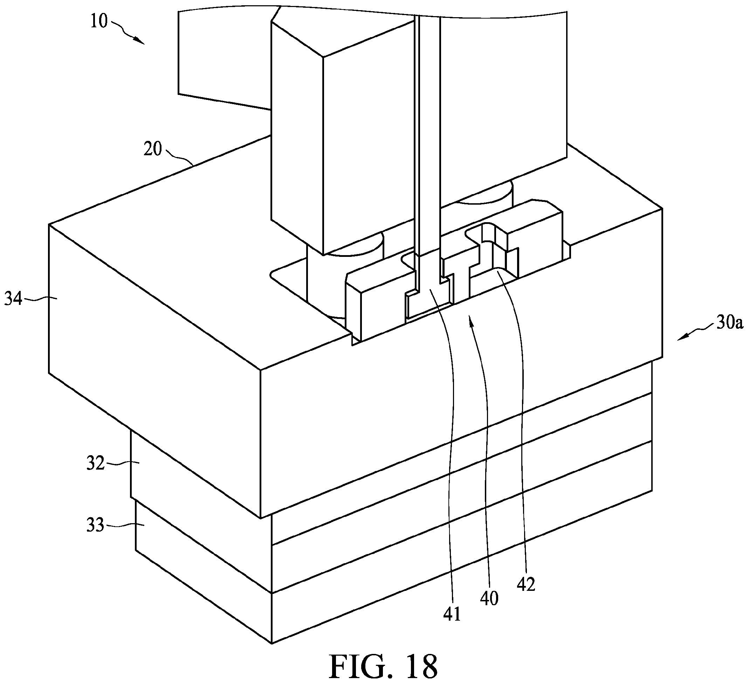

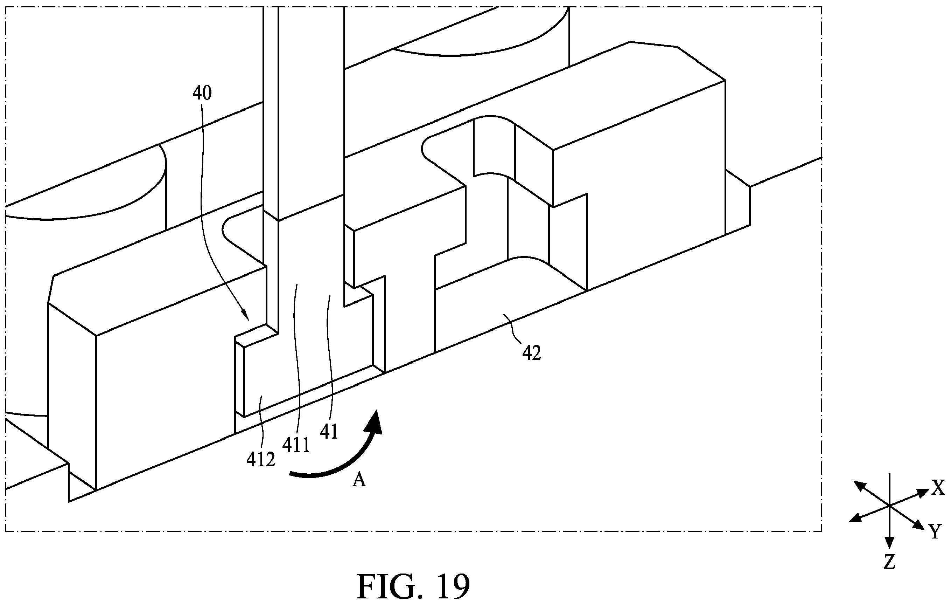

FIG. 18 and FIG. 19 show schematic diagrams of a portion of the injection molding system 100 according to a specific embodiment of the present disclosure. In some embodiments, referring to FIG. 18, the support device 40 may be in either between two states, that is, a locked stated and an unlocked state. In the unlocked state, the first element 41 enters the corresponding second element 42, but is not yet locked by the second element 42. In other words, when the support device 40 is in the unlocked state, the first element 41 can still be withdrawn from the second element 42. In the locked state, the first element 41 enters the corresponding second element 42 and is locked, such that the first element 41 cannot be receded from the second element 42. FIG. 18 shows an example of the support device 40 being in a locked state. The support device 40 may be manually or automatically operated and controlled. The support device 40 may be manually or automatically switched between the two states.

In some embodiments, the first element 41 is rotated and fixed at the extrusion system 10. In some embodiments, referring to FIG. 19, the first element 19 includes an elongated narrow portion 411 and an arm 412. The elongated narrow portion 411 and the arm 412 are rotatable in a direction shown by the arrow A. The elongated narrow portion 411 is fixed at the extrusion system 10, and extends in a first direction Z toward the second upper mold 32. The arm 412 is coupled to the elongated narrow portion 411, and extends in a second direction X basically perpendicular to the first direction Z or a third direction Y basically perpendicular to the first direction Z. In some embodiments, the first element 41 is has an inverted T shape. Once the first element 41 enters the second element 42, the support device 40 becomes in the locked state from the unlocked state by means of rotating the arm 412 of the first element 42. In some embodiments, by rotating the arm 412 of the first element 41 by approximately 90 degrees, the first element 42 becomes locked with the second element 42. FIG. 19 shows the arm 412 is locked with the second element 42 once the arm 412 is rotated by approximately90 degrees. As a result, the support device 40 is in the locked state, and the discharge passage 50 and the molding device 40 are tightly connected, so that the injection of the molding material M from the extrusion system 10 to the discharge passage 50 may then start.

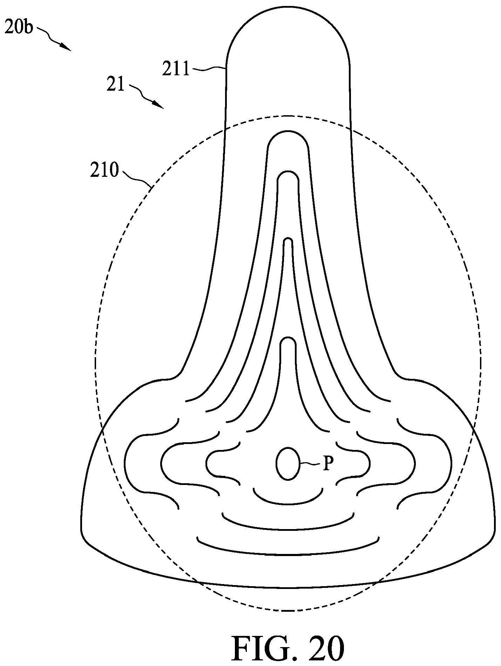

FIGS. 20 to 22 show top views of a composite according to a specific embodiment of the present disclosure. In some embodiments, the composites 20a and 20b may be cushions, for example but not limited to, seating cushions. In some embodiments, the composites 20a and 20b may be seating cushions of transportation means, for example but not limited to, seating cushions of bicycles. In some embodiments, referring to FIGS. 20 to 22, the foam structure 21 of the composite 20a and 20b, once having been formed by method 910 or 920, may have a texture 210 presented on a surface. In some embodiments, the texture 210 is formed on the first surface 211.

The texture 210 may be generated due to the following reasons: (1) due to pre-injection of the gas G in the mold cavity 31 (the gas is filled in the mold cavity 31 before the molding material M is injected), hence the texture 210 formed on the surface of the foam structure 21 because of the pre-injected gas G; (2) the texture 210 formed due to the method of injecting the molding material M into the mold cavity 31; (3) the texture 210 of the injected molding material M on a position corresponding to the feed port 35; (4) the number of positions P of injection of the molding material M; and (5) the shape of the mold cavity 31. In some embodiments, the texture 210 presented on the surface of the foam structure 21 may reflect light having multiple different wavelengths.

In some embodiments, referring to FIG. 20, the first surface 211 has one position P. In some embodiments, the position P corresponds the position of the feed port 35, and the foam structure 21 is formed from the molding material M injected into the mold cavity 31 via one feed port 35. The texture 210 extends and distributes from the position P in a manner conforming with the shape of the foam structure 21. In some embodiments, the position P is located at the center of the texture 210.

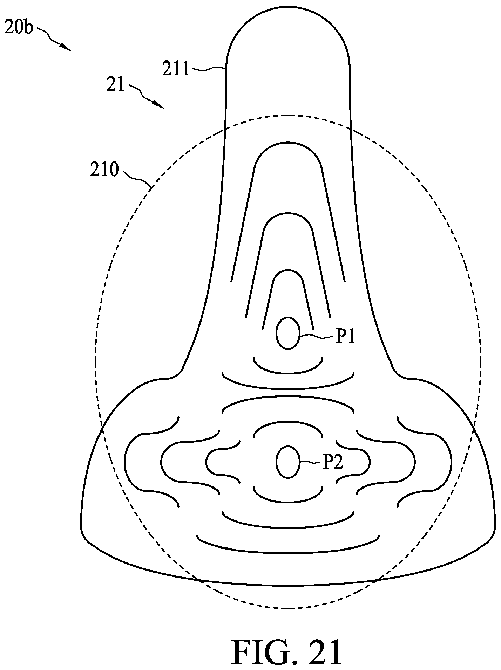

In some embodiments, referring to FIG. 21, there are two positions including a position P1 and a position P2 of the molding material M. The position P1 is neighboring to the position P2. In some embodiments, the positions P1 and P2 correspond the positions of the feed ports 35, and the foam structure 21 is formed from the molding material M injected into the mold cavity 31 via two feed ports 35. The texture 210 may extend and distribute from the position P1 and the position P2. In some embodiments, the texture 210 is formed by outward distributions from the position P1 and the position P2. The texture 210 distributed from the position P1 may conform to the shape of the mold cavity 31 and is affected by the molding material M injected from the position P2. The texture 210 distributed from the position P2 may conform to the shape of the mold cavity 31 and is affected by the molding material M injected from the position P1.

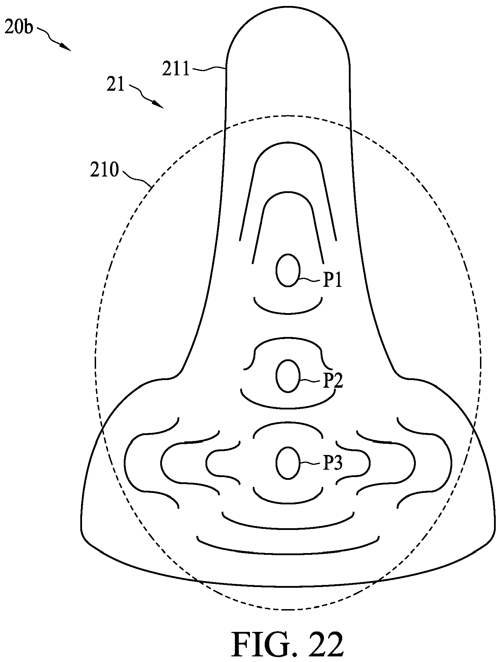

In some embodiments, referring to FIG. 22, there are three positions including a position PI, a position P2 and a position P3 of the molding material M. In some embodiments, the position P2 is located between the position P1 and the position P3. In some embodiments, the positions PI, P2 and P3 correspond the positions of the feed ports 35, and the foam structure 21 is formed from the molding material M injected into the mold cavity 31 via three feed ports 35. In some embodiments, the position PI, the position P2 and the position P3 are arranged in a line or an arc. In some embodiments, the texture 210 is formed by outward distributions from the position PI, the position P2 and the position P3. The texture 210 may extend and distribute from the position PI, the position P2 and the position P3. The texture 210 distributed from the position P1 may conform to the shape of the mold cavity 31 and is affected by the molding material M injected from the position P2. The texture 210 distributed from the position P2 may conform to the shape of the mold cavity 31 and is affected by the molding material M injected from the position P1 and the position P3. The texture 210 distributed from the position P3 may conform to the shape of the mold cavity 31 and is affected by the molding material M injected from the position P2.

The features of several specific embodiments are described as above for a person skilled in the art to better understand the various aspects of the present disclosure. A person skilled in the art could understand that, the present disclosure may be easily used as the basis for designing or modifying other operations and structures so as to accomplish the same object and/or the same advantages of the specific embodiments described in the literature. A person skilled in the art should also appreciate that, various changes, substitutions, replacements and modifications may be made without departing from the spirit and scope of the present disclosure to such equivalent structures within the spirit and scope of the present disclosure.

Moreover, the scope of the present application is not limited to specific embodiments of the programs, machines, manufacturing, material compositions, components, methods or steps given in the detailed description. On the basis of the disclosure of the present disclosure, a person skilled in the art could easily understand that, programs, machines, manufacturing, material compositions, components, methods or steps that currently exist or to be later developed in accordance with the present disclosure can perform the same functions or achieve substantially the same results as the corresponding embodiments described herein. Thus, it is expected that such programs, machines, manufacturing, material compositions, components, methods or steps are to be encompassed within the scope of the appended claims.

## Claims

1. A composite, comprising:
a flexible layer; and
a foam structure, the foam structure being contact with at least a portion of the flexible layer,
wherein, the foam structure comprises a molding material, the molding material comprises a polymeric material and a foaming agent, and the flexible layer is softened.

2. The composite according to claim 1, wherein the composite and a mold cavity are conformal, and the mold cavity is defined by a first mold and a second mold.

3. The composite according to claim 2, wherein the mold cavity comprises a first mold cavity of the first mold and a second mold cavity of the second mold, and the flexible layer and an inner wall of the first mold cavity are conformal.

4. The composite according to claim 1 or 2, wherein the flexible layer comprises a curved surface, and the foam structure and the flexible layer are conformal.

5. The composite according to claim 2 or 3, further comprising:
a texture, located on the foam structure, a position and a shape of the texture corresponding to a shape of the mold cavity and a feed port in communication with the mold cavity.

6. A method of manufacturing a composite, comprising:
disposing a flexible layer between a first mold and a second mold, wherein at least a portion of the flexible layer is located in a mold cavity defined by the first mold and the second mold, and the mold cavity comprises a first mold cavity of the first mold and a second mold cavity of the second mold;
pushing or pulling the at least a portion of the flexible layer toward the first mold, such that the at least a portion of the flexible layer is placed in the first mold cavity; and
injecting a molding material into the mold cavity, such that the molding material and the at least a portion of the flexible layer in the first mold come into contact and form the composite.

7. The method according to claim 6, further comprising injecting or discharging a gas into or out of the mold cavity, wherein the gas moves the flexible layer and has at least a portion of the flexible layer and an inner wall of the first mold come into contact.

8. The method according to claim 6 or 7, wherein the flexible layer is softened.

9. The method according to claim 7, wherein the gas is in the first mold cavity, and the gas is discharged via the first mold.

10. The method according to claim 7 or 9, wherein the gas is injected into the mold cavity via the second mold, and a gas in the first mold cavity is simultaneously discharged via the first mold.

11. The method according to any of claims 6 to 8, further comprising:
fixing the flexible layer between the first mold and the second mold.

12. The method according to any of claims 6 to 9 or 11, further comprising:
stretching the flexible layer in the mold cavity.

13. A method of manufacturing a composite comprising a molding material and a flexible layer, comprising:
providing a molding device, wherein the molding device comprises a first mold, a second mold capable of being positioned in alignment with the first mold, and a mold cavity defined by the first mold and the second mold, and the mold cavity comprises a first mold cavity of the first mold and a second mold cavity of the second mold; and
disposing a flexible layer between the first mold and the second mold;
positioning the first mold in alignment with the second mold such that at least a portion of the flexible layer is located in the mold cavity;
injecting or discharging a gas into or out of the mold cavity, such that at least a portion of the flexible layer is pushed or pulled toward an inner wall of the first mold; and
injecting a molding material into the mold cavity, contacting the molding material and the flexible layer and forming the composite, wherein the at least a portion of the flexible layer is located between the molding material and the first mold and the molding material comprises a foam material.

14. The method according to claim 13, wherein the flexible layer is pushed by the gas toward the inner wall of the first mold and is adhered to the inner wall.

15. The method according to claim 13 or 14, further comprising:
discharging a gas between the flexible layer and the inner wall of the first mold.
